(19) Europäisches Patentamt
European Patent Office
Office européen des brevets

(11) EP 0 683 980 B1

(12) EUROPÄISCHE PATENTSCHRIFT

(45) Veröffentlichungstag und Bekanntmachung des Hinweises auf die Patenterteilung:
**24.03.1999 Patentblatt 1999/12**

(51) Int. Cl.[6]: **A01N 43/653**
// (A01N43/653, 43:40)

(21) Anmeldenummer: **95111985.8**

(22) Anmeldetag: **24.10.1991**

(54) **Fungizide Mittel**

Fungicidal agents

Agents fongicides

(84) Benannte Vertragsstaaten:
**AT BE CH DE DK ES FR GB GR IT LI LU NL SE**

(30) Priorität: **02.11.1990 CH 3489/90**

(43) Veröffentlichungstag der Anmeldung:
**29.11.1995 Patentblatt 1995/48**

(62) Dokumentnummer(n) der früheren Anmeldung(en) nach Art. 76 EPÜ:
**91810821.8 / 0 484 279**

(73) Patentinhaber:
- **Novartis AG**
**4058 Basel (CH)**
Benannte Vertragsstaaten:
**BE CH DE DK ES FR GB GR IT LI LU NL SE**
- **Novartis-Erfindungen Verwaltungsgesellschaft m.b.H.**
**1235 Wien (AT)**
Benannte Vertragsstaaten:
**AT**

(72) Erfinder: **Küng, Ruth**
**CH-4123 Allschwil (CH)**

(56) Entgegenhaltungen:

| | |
|---|---|
| **EP-A- 0 235 082** | **DE-A- 3 736 651** |
| **FR-A- 2 607 669** | **GB-A- 2 136 423** |

- **RESEARCH DISCLOSURE, Nr. 307, November 1989 HAVANT GB, Seite 781 XP 000084558 ANONYMOUSLY 'Zusammenfassung Nr. 30713: Fungizide Kombinationspräparate'**
- **RESEARCH DISCLOSURE, Nr. 264, April 1986 HAVANT GB, Seite 172 ANONYMOUSLY 'Zusammenfassung Nr. 26402: Fungizide Kombinationspräparate'**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 683 980 B1

Printed by Xerox (UK) Business Services
2.16.7/3.6

## Beschreibung

Gegenstand der vorliegenden Erfindung sind neue Wirkstoffkombinationen zur Bekämpfung von Pflanzenkrankheiten und Verfahren zur Anwendung solcher Gemische zur Blatt-, Boden- und Beizapplikation.

Die erfindungsgemässen Kombinationen sind gekennzeichnet durch einen Gehalt an

a) 2-(4-Chlorphenyl)-3-cyclopropyl-1-[(1H-1,2,4-thiazol-1-yl)butan-2-ol der Formel I

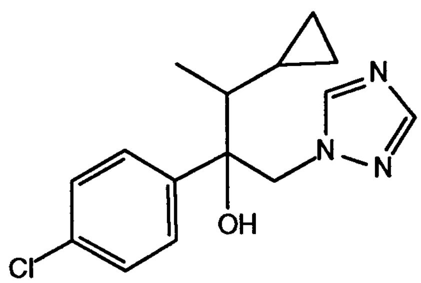

I

bzw. dessen Säureadditionssalzen und Metallkomplexen, und

b) 1-[3-(4-tert.Butylphenyl)-2-methylpropyl]-piperidin der Formel III

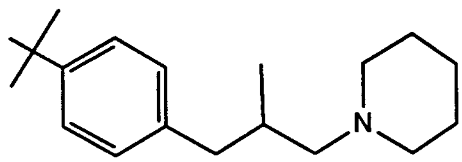

III

bzw., dessen Säureadditionssalzen.

Die Komponente a) ist unter den, Namen Cyproconazol bekannt geworden. Ihre Synthese und fungiziden Eigenschaften sind in der DE-OS 34 06 993 beschrieben.

Die Komponente b) ist unter dem Namen Fenpropidin bekanntgeworden. Ihre Synthesen und fungiziden Eigenschaften sind in der DE-OS 2 752 135 beschrieben.

Es wurde überraschenderweise gefunden, dass die fungizide Wirkung der erfindungsgemässen Wirkstoffkombination wesentlich höher ist als die Summe der Wirkungen der einzelnen Wirkstoffe. Es liegt also eine nicht vorhersehbare synergistisch gesteigerte Wirkung vor und nicht nur eine Wirkungsergänzung, wie sie durch die Kombination zweier Wirkstoffe hätte erwartet werden können. Die erfindungsgemässen Wirkstoffkombinationen stellen somit eine Bereicherung der Technik dar.

Wenn die Wirkstoffe in den erfindungsgemässen Wirkstoffkombinationen in bestimmten Gewichtsverhältnissen vorhanden sind, zeigt sich der synergistische Effekt besonders deutlich. Jedoch können die Gewichtsverhältnisse der Wirkstoffe in den Wirkstoffkombinationen je nach Anwendung in einem relativ grossen Bereich variiert werden. Im allgemeinen entfallen auf einen Gewichtsteil an Wirkstoff der Formel (I) 0,2-20 Gewichtsteile, vorzugsweise 0,5-10 Gewichtsteile an Wirkstoff der Formel (III). Dies entspricht einem Gewichtsverhältnis der Komponente a) zur Komponente b) von 5:1 bis 1:20. Besonders bevorzugt sind Kombinationen in denen auf einen Gewichtsteil der Formel (I) 1 bis 8 Gewichtsteile an Wirkstoff der Formel III entfallen, besonders a):b) = 2:1 bis 1:10 und ganz besonders 1:1 bis 1:4. Als Beispiele seien auch für die Praxis besonders geeignete Mischungsverhältnisse von a):b) = 2:3; 2:5; 1:2 und 1:3 genannt. Für Säureadditionssalze bzw. Metallkomplexe der Wirkstoffe kommen die entsprechenden Mengenverhältnisse in Frage.

Unter den Säuren, die zur Herstellung von Salzen der Formel I oder III verwendet werden können, sind zu nennen: Halogenwasserstoffsäuren wie Bromwasserstoffsäure und Chlorwasserstoffsäure, ferner Phosphorsäure, Salpetersäure und Schwefelsäure, ferner mono-, bi- und trifunktionelle Carbonsäuren und Hydroxycarbonsäuren wie Ameisensäure, Bernsteinsäure, Essigsäure, Glycolsäure, Fumarsäure, Milchsäure, Oxalsäure, Propionsäure, Sorbinsäure, Trichloressigsäure, Trifluoressigsäure, Zitronensäure, ferner Sulfonsäuren wie Benzolsulfonsäure, 1,5-Naphthalindisulfonsäure und p-Toluolsulfonsäure sowie (Thio)Saccharin.

Metallkomplexe bestehen aus dem zugrundeliegenden organischen Molekül und einem anorganischen oder organischen Metallsalz, beispielsweise den Halogeniden, Nitraten, Sulfaten, Phosphaten, Acetaten, Trifluoracetaten, Trichloracetaten, Propionaten, Tartraten, Sulfonaten, Salicylaten, Benzoaten usw. der Elemente der zweiten Hauptgruppe wie Aluminium, Zinn oder Blei sowie der ersten bis achten Nebengruppe wie Chrom, Mangan, Eisen, Kobalt, Nickel, Kupfer, Zink usw. Bevorzugt sind die Nebengruppen-Elemente der 4. Periode. Die Metalle können dabei in den verschiedenen ihnen zukommenden Wertigkeiten vorliegen.

Die erfindungsgemässen Wirkstoffmischungen und deren Säureadditionssalze besitzen pflanzenfungizide Wirkung und können dementsprechend zur Bekämpfung von Pilzen in der Landwirtschaft und im Gartenbau Verwendung finden. Sie eignen sich insbesondere zur Hemmung des Wachstums oder zur Vernichtung von phytopathogenen Pilzen auf Pflanzenteilen, z.B. Blättern, Stengeln, Wurzeln, Knollen , Früchten oder Blüten, und auf Saatgut sowie von im Erdboden auftretenden Schadpilzen.

Die erfindungsgemässen Wirkstoffmischungen eignen sich besonders zur Bekämpfung von Ascomyceten (Erysiphe graminis, Uncinula necator, Venturia, Sphaerotheca pannosa, Erysiphe betae) und Basidiomyceten, zu denen die Rostkrankheiten zählen, wie beispielsweise solche der Gattungen Puccinia, Uromyces und Hemileia (insbesondere Puccinia recondita, Puccinia striiformis, Puccinia graminis, Puccinia coronata, Uromyces fabae, Uromyces appendiculatus, Hemileia vastatrix). Ferner wirken die erfindungsgemässen Wirkstoffkombinationen gegen Fungi imperfecti der Gattungen Helminthosporium (z.B. Helminthosporium oryzae, Helminthosporium teres, Helminthosporium sativum, Helminthosporium tritici-repentis), Alternaria (z.B. Alternaria brassicola, Alternaria brassicae), Septoria (z.B. Septoria avenae), Cercospora (z.B. Cercospora beticola), Ceratocystis (z.B. Ceratocystis ulmi), Pyricularia (z.B. Pyricularia oryzae und Mycosphaerella fijiensis).

Die erfindungsgemässen Wirkstoffkombinationen eignen sich insbesondere auch zur Bekämpfung von Pilzstämmen, die eine gewisse Resistenz gegen Wirkstoffe aus der Triazolklasse entwickelt haben.

Im Freiland werden bevorzugt Dosierungen von 75 bis 1000 g Wirkstoffmischung pro Hektar und Behandlung zur Anwendung gebracht. Zur Bekämpfung von Pilzen im Samenbeizverfahren werden mit Vorteil Dosierungen von 0,01 g bis 1,0 g Wirkstoffmischung pro kg Samen verwendet. Sinngemäss gelten diese Angaben für Pflanzenvermehrungsgut allgemein also auch für kg-Mengen an Stecklingen, Knollen, Wurzelwerk etc.

Die erfindungsgemässen Fungizidkombinationen zeichnen sich durch systemische, kurative und präventive Wirkung aus.

Die erfindungsgemässen Wirkstoffgemische können zu verschiedenartigen Mitteln, z.B. Lösungen, Suspensionen, Emulsionen, emulgierbaren Konzentraten und pulverförmigen Präparaten, formuliert werden. Solche fungiziden Mittel bilden einen Gegenstand der vorliegenden Erfindung. Die erfindungsgemässen fungiziden Mittel sind dadurch gekennzeichnet, dass sie eine wirksame Menge von Cyproconazol und und Fenpropidin bzw. Säureadditionssalze oder Metallkomplexe dieser Wirkstoffe sowie Formulierungshilfsstoffe enthalten. Die Mittel enthalten zweckmässigerweise zumindest einen der folgenden Formulierungshilfsstoffe:

Feste Trägerstoffe; Lösungs- bzw. Dispersionsmittel; Tenside (Netzmittel und Emulagtoren); Dispergiermittel (ohne Tensidwirkung); und andersartige Zusatzstoffe, wie beispielsweise Stäbilisatoren.

Als feste Trägerstoffe kommen im wesentlichen in Frage: natürliche Mineralstoffe, wie Kaolin, Tonerden, Kieselgur, Talkum, Bentonit, Kreide, z.B. Schlämmkreide, Magnesiumcarbonat, Kalkstein, Quarz, Dolomit, Attäpulgit, Montmorillonit und Diatomeenerde; synthetische Mineralstoffe, wie hochdisperse Kieselsäure, Aluminiumoxid und Silikate; organische Stoffe, wie Cellulose, Stärke, Harnstoff und Kunstharze; und Düngemittel, wie Phosphate und Nitrate, wobei solche Trägerstoffe z.B. als Granulate oder Pulver vorliegen können.

Als Lösungs- bzw. Dispersionsmittel kommen im wesentlichen in Frage: Aromaten, wie Toluol, Xylole, höher alkylierte Benzole und Alkylnaphthaline; chlorierte Aromaten und chlorierte aliphatische Kohlenwasserstoffe, wie Chlorbenzole, Chloräthylene und Methylenchlorid; (cyclo)aliphatische Kohlenwasserstoffe, wie Cyclohexan und Paraffine, z.B. Erdölfraktionen; Alkohole, wie Butanol und Glykol, sowie deren Aether und Ester; Ketone, wie Aceton, Methyläthylketon, Methylisobutylketon, Isophoron und Cyclohexanon; und stark polare Lösungs- bzw. Dispersionsmittel, wie Dimethylformamid, N-Methylpyrrolidon und Dimethylsulfoxid, wobei solche Lösungs- bzw. Dispersionsmittel vorzugsweise Flammpunkte von mindestens 30°C und Siedepunkte von mindestens 50°C aufweisen, und Wasser. Unter den Lösungs- bzw. Dispersionsmitteln kommen auch sogenannte verflüssigte gasförmige Streckmittel oder Trägerstoffe in Frage. Das sind solche Produkte, welche bei Raumtemperatur und unter Normaldruck gasförmig sind. Im Falle der Benutzung von Wasser als Lösungsmittel können z.B. auch organische Lösungsmittel als Hilfslösungsmittel verwendet werden.

Die Tenside (Netzmittel und Emulgatoren) können nicht-ionische Verbindungen sein, wie Kondensationsprodukte von Fettsäuren, Fettalkoholen oder fettsubstituierten Phenolen mit Aethylenoxid; Fettsäureester und -äther von

Zuckern oder mehrwertigen Alkoholen; die Produkte, die aus Zuckern oder mehrwertigen Alkoholen durch Kondensation mit Aethylenoxid erhalten werden; Blockpolymere von Aethylenoxid und Propylenoxid; oder Alkyldimethylaminoxide.

Die Tenside können auch anionische Verbindungen darstellen, wie Seifen; Fettsulfatester, z.B. Dodecylnatriumsulfat, Octadecylnatriumsulfat und Cetylnatriumsulfat; Alkylsulfonate, Arylsulfonate und fettaromatische Sulfonate, wie Alkylbenzolsulfonate, z.B. Calcium-dodecylbenzolsulfonat, und Butylnaphthalinsulfonate; und komplexere Fettsulfonate, z.B. die Amidkondensationsprodukte von Oelsäure und N-Methyltaurin und das Natriumsulfonat von Dioctylsuccinat.

Die Tenside können schliesslich kationische Verbindungen sein, wie Alkyldimethylbenzylammoniumchloride, Dialkyldimethylammoniumchloride, Alkyltrimethylammoniumchloride und äthoxylierte quaternäre Ammoniumchloride.

Als Dispergiermittel (ohne Tensidwirkung) kommen im wesentlichen in Frage: Natrium-und Ammoniumsalze von Ligninsulfonsäure, Natriumsalze von Maleinsäureanhydrid-Diisobutylen-Copolymeren, Natrium- und Ammoniumsalze von sulfonierten Polykondensationsprodukten aus Naphthalin und Formaldehyd, Nathumsalze von polymeren Carbonsäuren und Sulfitablaugen.

Als Dispergiermittel, die sich insbesondere als Verdickungs- bzw. Antiabsetzmittel eignen, können z.B. Methylcellulose, Carboxymethylcellulose, Hydroxyäthylcellulose, Polyvinylalkohol, Alginate, Caseinate und Blutalbumin eingesetzt werden.

Beispiele von geeigneten Stabilisatoren sind säurebindende Mittel, z.B. Epichlorhydrin, Phenylglycidäther und Soyaepoxide; Antioxidantien, z.B. Gallussäureester und Butylhydroxytoluol; UV-Absorber, z.B. substituierte Benzophenone, Diphenylacrylnitrilsäureester und Zimtsäureester; und Deaktivatoren, z.B. Salze der Aethylendiamintetraessigsäure und Polyglykole.

Die erfindungsgemässen fungiziden Mittel können neben den erfindungsgemässen Kombinationen auch andere Wirkstoffe enthalten, z.B. anderweitige fungizide Mittel [Wirkstoffkomponente c) oder d)], insektizide und akarizide Mittel, Bakterizide, Pflanzenwachstumsregulatoren und Düngemittel. Solche Kombinationsmittel eignen sich zur Verbreiterung des Wirkungsspektrums oder anderweitigen, günstigen Beeinflussung des Pflanzenwachstums.

Im allgemeinen enthalten die erfindungsgemässen fungiziden Mittel, je nach deren Art, zwischen 0,0001 und 95 Gewichtsprozent an erfindungsgemässer Wirkstoffkombination. In Konzentraten ist die Wirkstoffkonzentration normalerweise im höheren Bereich des obigen Konzentrationsintervalls. Diese Formen können dann mit gleichen oder verschiedenen Formulierungshilfsstoffen bis zu Wirkstoffkonzentrationen verdünnt werden, die sich für den praktischen Gebrauch eignen, und solche Konzentrationen liegen normalerweise im niedrigeren Bereich des obigen Konzentrationsintervalls. Emulgierbare Konzentrate enthalten im allgemeinen 5 bis 95 Gewichtsprozent, vorzugsweise 25 bis 85 Gewichtsprozent, der erfindungsgemässen Wirkstoffkombination. Als Anwendungsformen kommen u.a. gebrauchsfertige Lösungen, Emulsionen und Suspensionen, die sich beispielsweise als Spritzbrühen eignen, in Frage. In solchen Spritzbrühen können z.B. Konzentrationen zwischen 0,0001 und 20 Gewichtsprozent vorliegen. Im Ultra-Low-Volume-Verfahren können Spritzbrühen formuliert werden, in denen die Wirkstoffkonzentration vorzugsweise von 0,5 bis 20 Gewichtsprozent beträgt, während die im Low-Volume-Verfahren und im High-Volume-Verfahren formulierten Spritzbrühen vorzugsweise eine Wirkstoffkonzentration von 0,02 bis 1,0 bzw. 0,002 bis 0,1 Gewichtsprozent aufweisen.

Die erfindungsgemässen fungiziden Mittel können dadurch hergestellt werden, dass man eine erfindungsgemässe Wirkstoff-Kombination mit Formulierungshilfsstoffen vermischt.

Die Herstellung der Mittel kann in bekannter Weise durchgeführt werden, z.B. durch inniges Vermischen der Wirkstoffe mit festen Trägerstoffen, durch Auflösen oder Suspendieren in geeigneten Lösungs- bzw. Dispersionsmitteln, eventuell unter Verwendung von Tensiden als Netzmitteln oder Emulgatoren oder von Dispergiermitteln, durch Verdünnen bereits vorbereiteter emulgierbarer Konzentrate mit Lösungs-bzw. Dispersionsmitteln, usw.

Im Falle von pulverförmigen Mitteln können die Wirkstoffe mit einem festen Trägerstoff vermischt werden, z.B. durch Zusammenmahlen; oder man kann den festen Trägerstoff mit einer Lösung oder Suspension der Wirkstoffe imprägnieren und dann das Lösungs-bzw. Dispersionsmittel durch Abdunsten, Erhitzen oder durch Absaugen unter vermindertem Druck entfernen. Durch Zusatz von Tensiden bzw. Dispergiermitteln kann man solche pulverförmige Mittel mit Wasser leicht benetzbar machen, so dass sie in wässrige Suspensionen, die sich z.B. als Spritzmittel eignen, übergeführt werden können.

Die erfindungsgemässen Wirkstoffmischungen können auch mit einem Tensid und einem festen Trägerstoff zur Bildung eines netzbaren Pulvers vermischt werden, welches in Wasser dispergierbar ist, oder sie können mit einem festen vorgranulierten Trägerstoff zur Bildung eines granulatförmigen Produktes vermischt werden.

Wenn gewünscht, können die erfindungsgemässen Wirkstoffmischungen in einem mit Wasser nicht mischbaren Lösungsmittel, wie beispielsweise einem alicyclischen Keton, gelöst werden, das zweckmässigerweise gelösten Emulgator enthält, so dass die Lösung bei Zugabe zu Wasser selbstemulgierend wirkt. Andernfalls können die Wirkstoffkombinationen mit einem Emulgator vermischt und das Gemisch dann mit Wasser auf die gewünschte Konzentration verdünnt werden. Zudem können die Wirkstoffkombinationen in einem Lösungsmittel gelöst und danach mit einem Emulgator gemischt werden. Ein solches Gemisch kann ebenfalls mit Wasser auf die gewünschte Konzentration verdünnt werden. Auf diese Weise erhält man emulgierbare Konzentrate bzw. gebrauchsfertige Emulsionen.

Die Verwendung der erfindungsgemässen Mittel kann nach den im Pflanzenschutz bzw. in der Landwirtschaft üblichen Applikationsmethoden erfolgen. Das erfindungsgemässe Verfahren zur Bekämpfung von Schadpilzen ist dadurch gekennzeichnet, dass man den zu schützenden Ort des Pflanzenwachstums oder das zu schützende Pflanzengut, z.B. Pflanzen, Pflanzenteile oder Vermehrungsgut (z.B. Samen), mit einer wirksamen Menge einer erfindungsgemässen Wirkstoffkombination bzw. einem erfindungsgemässen Mittel behandelt.

Formulierungsbeispiele

Beispiel 1: Spritzpulver (WP)

| | |
|---|---|
| Fenpropidin | 25 %w/w |
| Cyproconazol | 25 %w/w |
| Kieselsäure hydratisiert (Silica-Trägerstoff) | 25 %w/w |
| Nonylphenol-polyethoxylat (Netzmittel) | 4 %w/w |
| Na-Polycarboxylat (Dispergiermittel) | 4 %w/w |
| Calciumcarbonat (Inertstoff, Träger) | 17 %w/w |

Zur Herstellung dieses Spritzpulvers werden in einem ersten Arbeitsprozess Fenpropidin und Nonylphenol-polyethoxylat gemischt und in einem Pulvermischer auf die vorgelegte Kieselsäure aufgesprüht.

Anschliessend werden die weiteren Komponenten zugemischt und z.B. mit einer Stiftenmühle fein gemahlen.

Das resultierende Spritzpulver ergibt beim Einrühren in Wasser eine feine Suspension in gewünschter Verdünnung, die sich als gebrauchsfertige Spritzbrühe eignet, z.B. zum Beizen von Pflanzenvermehrungsgut, wie Pflanzenknollen, Wurzelwerk und Blattwerk von Setzlingen oder von Pflanzensamen.

Biologische Beispiele

B-1. Mycelwachstumstest mit Helminthosporium repentis-tritici

a) Methode:

Der Pilzstamm wird während 7 Tagen bei 18°C und 16 Std./Tag simulierter Sonnenlichtbestrahlung auf Potato-Dextrose-Agar (PDA) kultiviert, das einen der beiden oder beide Wirkstoffe enthält oder wirkstoffrei (Kontrolle) ist. Hierzu werden die Wirkstoffe I und III je in reinem Ethanol gelöst und den gewünschten Mengenverhältnissen entsprechend gemischt und verdünnt Dann wird eine bestimmte Menge bei 50°C dem flüssigen PDA-Medium zugefügt und innig vermischt. Es werden Agar-Medien mit Wirkstoffkonzentrationen von 30; 10; 3; 1; 0,3; 0,1; 0,03 und 0,01 mg AS/Liter hergestellt. Die Ethanolkonzentration im Medium beträgt einheitlich 0,1 %.

Das flüssige Kulturmedium wird dann in Petrischalen gegossen (9 cm ∅) und im Zentrum mit einer Agarrondelle (5 mm ∅) beimpft, die aus einer 7 Tage alten Pilzkultur ausgestanzt wurde. Die beimpften Schalen werden während 5 Tagen bei 18°C in einer Klimakammer im Dunkeln inkubiert. Jeder Versuch läuft in 3 bzw. 4 Wiederholungen.

b) Auswertung:

Nach der Inkubationsperiode wird der Koloniedurchmesser bestimmt. Die Fungizidwirkungen nach Abbott werden in Probitwerte (Bliss, C.I. 1935)* transformiert und gegen die Logarithmen der Fungizidkonzentrationen in eine Dosis-Wirkungsbeziehung gesetzt. Mit Hilfe der probit-log Darstellung wird die Dosis/Wirkung-Kurve in eine Gerade umgewandelt (D.L. Finney 1971 "Probit analysis", 3rd ed., Cambridge, UK: Cambridge University Press. Die lineare Regression und die ED-50 Werte (effektive Dosierung) werden aus dieser Geraden bestimmt.

Berechnung der Synergiefaktoren (SF) von Fungiziden in einer Mischung

Die theoretische Wirkung ($ED_{th}$) einer Mischung kann mit Hilfe der Formel von Wadley (**) berechnet werden, wenn die ED-Werte der Einzelkomponenten der Mischung bekannt sind:

$$\text{ED-50 (th)} = \frac{a + b}{\frac{a}{\text{ED-50}_a} + \frac{b}{\text{ED-50}_b}}$$

a, b = Verhältnisse der Fungizide in der Mischung

Das Verhältnis aus theoretisch berechneter Wirkung ($ED_{th}$) und tatsächlich beobachteter Wirkung ($ED_{ob}$) der Mischung ergibt den Synergiefaktor (SF).

$$SF = \frac{\text{ED-50 (th)}}{\text{ED-50 (ob)}}$$

| | |
|---|---|
| SF > 1,2 | synergistische Interaktion |
| SF > 0,5 < 1,2 | additive Interaktion |
| SF < 0,5 | antagonistische Interaktion |

Nach U. Gisi et al. (1987) und Y. Levy et al. (1986), zeigen SF-Werte grösser als 1,0 schon eine synergistische Interaktion an. ***

Die Grenzen des Synergiefaktors einer bestimmten Mischung werden mit Hilfe der Standardabweichung der beobachteten ED-Werte bestimmt. SF-Werte grösser als 1,2 geben statistisch signifikanten Synergismus.

e) Resultate der Versuche mit Wirkstoff I und Wirkstoff III

Aktivitäten der Einzelkomponenten und des Gemisches (ED-50)

** Gisi, U., Binder, H., Rimbach, E. (1985)
Synergistic interactions of fungicides with different modes of action.
Trans. Br. mycol. Soc. 85 (2), 299-306
Levy, Y. et al. (1986)
The joint action of fungicides in mixture:
comparison of two methods of synergy calculation.
Bulletin OEPP 16, 651-657 (1986)

*** Gisi, U., Binder, H., Rimbach, E. (1985)
Synergistic interactions of fungicides with different modes of action.
Trans. Br. mycol. Soc. 85 (2), 299-306
Levy, Y. et al. (1986)
The joint action of fungicides in mixture:
comparison of two methods of synergy calculation.
Bulletin OEPP 16, 651-657 (1986)

Tabelle 1

| Wirkstoff \ Versuch Nr. | 1 | 2 | 3 | 4 |
|---|---|---|---|---|
| I | 9,0 | 30,9* | 13,1 | 12,9 |
| III | 3,6 | 3,2 | 2,8 | 0,8 |
| I:III = 1:1 | 1,9 | 2,3 | 1,6 | 0,6 |
| SF der ED-50 Werte | 2,7 | 2,5 | 2,9 | 2,5 |

* = berechneter Wert (ausserhalb des Messbereichs)

B-2. Mycelwachstumtest mit Septoria nodorum

Die Testmethode und ihre Auswertung gleichen der des biologischen Beispiels B- 1.

b) Resultate der Versuche mit Wirkstoff I und Wirkstoff III

Aktivitäten der Einzelkomponenten und des Gemisches (ED-50)

Tabelle 2

| Wirkstoff \ Versuch Nr. | 1 | 2 |
|---|---|---|
| I | 0,7 | 0,3 |
| III | 1,4 | 1,3 |
| I:III = 1:1 | 0,7 | 0,3 |
| SF der ED-50 Werte | 1,3 | 1,6 |

f) Kommentar:

Die Werte der Tabellen 1 und 2 zeigen für jeden der zwei bzw. vier unabhängig gelaufenen Versuche, dass die Fungizid-Wirkung sowohl eines Gemisches aus Wirkstoff I und Wirkstoff III eine signifikante Steigerung erfährt, d.h. es

liegt eine synergistisch gesteigerte Wirkung vor. Wie ersichtlich, sind diese Wirkungen jederzeit reproduzierbar.

Aehnliche Ergebnisse werden auch gegen Helminthosporium teres erzielt.

## Patentansprüche

1. Fungizides Mittel auf der Basis von mindestens zwei Wirkstoff-Komponenten, dadurch gekennzeichnet, dass a) die eine Wirkstoff-Komponente 2-(4-Chlorphenyl)-3-cyclopropyl-1-[(1H-1,2,4-triazol-1-yl)butan-2-ol der Formel I

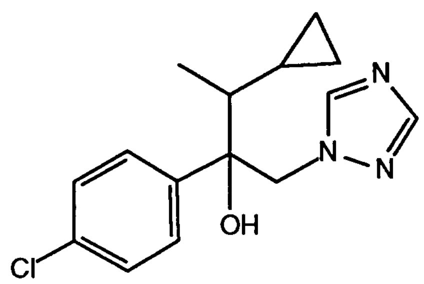

I

bzw. eines ihrer Säureadditionssalze oder Metallkomplexe ist, und dass b) die andere Wirkstoff-Komponente Fenpropidin = 1-[3-(4-tert.Butylphenyl)-2-methylpropyl]-piperidin der Formel III

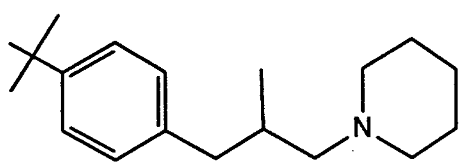

III

bzw. dessen Säureadditionssalz ist, zusammen mit einem geeigneten Trägermaterial.

2. Mittel nach Anspruch 1, dadurch gekennzeichnet, dass das Gewichtsverhältnis der Wirkstoff-Komponenten a) : b) = 5:1 bis 1:20 beträgt.

3. Mittel nach Anspruch 1, dadurch gekennzeichnet, dass das Gewichtsverhältnis der Wirkstoff-Komponenten a) : b) = 2:1 bis 1:10 beträgt.

4. Mittel nach Anspruch 1, dadurch gekennzeichnet, dass das Gewichtsverhältnis der Wirkstoff-Komponenten a) : b) = 1:1 bis 1:4 beträgt.

5. Verwendung einer Wirkstoffkombination gemäss Anspruch 1 zur Bekämpfung von Pilzen oder zur Verhütung von Pilzbefall.

6. Verfahren zur Bekämpfung von Pilzen, dadurch gekennzeichnet, dass man in beliebiger Reihenfolge oder gleichzeitig eine durch Pilze befallene oder gefährdete Stelle mit a) dem Wirkstoff der Formel I, 2-(4-Chlorphenyl)-3-cyclopropyl-1-[(1H-1,2,4-thazol-1-yl)butan-2-ol (= Cyproconazol) oder einem seiner Säureadditionssalze oder Metallkomplexe und mit b) dem Wirkstoff Fenpropidin der Formel III bzw. dessen Säureadditionssalz behandelt.

7. Verfahren gemäss Anspruch 6, dadurch gekennzeichnet, dass Pflanzenvermehrungsgut behandelt wird.

## Claims

1. A fungicidal composition based on at least two active substances characterized in that a) one active substance component is 2-(4-chlorophenyl)-3-cyclopropyl-1-[(1H-1,2,4-triazol-1-yl)butan-2-ol of the formula I

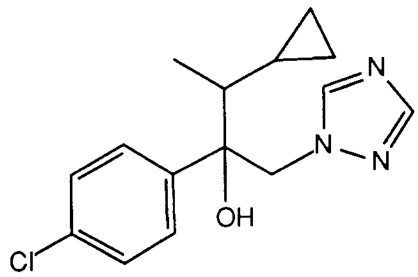

I

or an acid addition salt or metal complex thereof and in that b) the other active substance is fenpropidin = 1-[3-(4-tert-butylphenyl)-2-methylpropyl]piperidine of the formula III

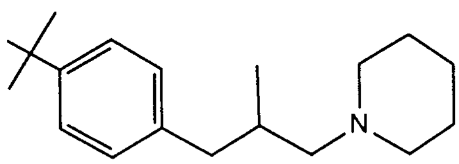

III

or an acid addition salt thereof, together with a suitable carrier material.

2. A composition according to claim 1, characterized in that the weight ratio of the active substances a):b) is 5:1 to 1:20.

3. A composition according to claim 1, characterized in that the weight ratio of the active substances a):b) is 2:1 to 1:10.

4. A composition according to claim 1, characterized in that the weight ratio of the active substances a):b) is 1:1 to 1:4.

5. The use of an active substance combination according to claim 1 for controlling fungi or for preventing fungal infection.

6. A process for controlling fungi, characterized in that it comprises treating a location infected or liable to be infected with fungi in any desired order or simultaneously with a) the active substance of the formula I, 2-(4-chlorophenyl)-3-cyclopropyl-1-[(1H-1,2,4-triazol-1-yl)butan-2-ol (= cyproconazole) or an acid addition salt or metal complex thereof and with b) the active substance fenpropidin of the formula III or an acid addition salt thereof.

7. A process according to claim 6, characterized in that plant propagation material is treated.

**Revendications**

1. Une composition fongicide à base d'au moins deux composants matières actives, caractérisée en ce que

   a) un des composants matières actives est le 2-(4-chlorophényl)-3-cyclopropyl-1-[(1H-1,2,4-triazol-1-yl)]butan-2-ol de formule I

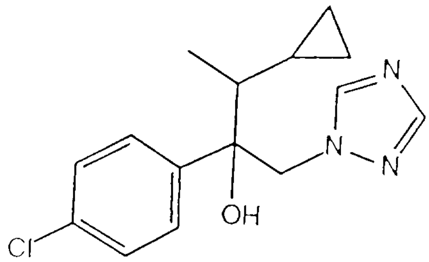

I

ou un de ses sels d'addition d'acides ou un de ses complexes métalliques et en ce que

b) l'autre composant matière active est la fenpropidine = 1-[3-(4-tert.-butylphényl)-2-méthylpropyl]-pipéridine de formule III

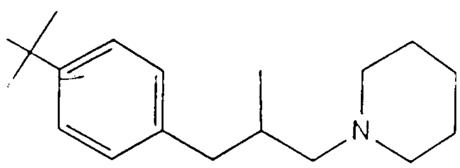

III

ou un de ses sels d'addition d'acides, ensemble avec un support approprié.

**2.** Une composition selon la revendication 1, caractérisée en ce que le rapport pondéral des composants matières actives a) : b) = 5:1 à 1:20.

**3.** Une composition selon la revendication 1, caractérisée en ce que le rapport pondéral des composants matières actives a) : b) = 2:1 à 1:10.

**4.** Une composition selon la revendication 1, caractérisée en ce que le rapport pondéral des composants matières actives a) : b) = 1:1 à 1:4.

**5.** Utilisation d'une combinaison des matières actives selon la revendication 1 pour la lutte contre les champignons ou pour la prévention des infestations par des champignons.

**6.** Un procédé de lutte contre les champignons, caractérisé en ce qu'on traite, dans n'importe quel ordre ou simultanément, une zone infestée ou menacée par des champignons avec a) la matière active de formule I, le 2-(4-chlorophényl)-3-cyclopropyl-1-[(1H-1,2,4-triazol-1-yl)]butan-2-ol (= cyproconazol) ou avec un de ses sels d'addition d'acides ou un de ses complexes métalliques et avec b) la matière active fenpropidine de formule III ou un de ses sels d'addition d'acides.

**7.** Un procédé selon la revendication 6, caractérisé en ce qu'on traite les organes de multiplication des végétaux.